# EUROPEAN PATENT APPLICATION

(11) **EP 1 216 967 A1**
(43) Date of publication of application: **26.06.2002**
(21) Application number: 00127850.6
(22) Date of filing: 19.12.2000
(51) Int. Cl.: C03B 37/014

(54) **Method for manufacturing a glass optical fibre preform by vapour deposition**

(71) Applicant: PIRELLI CAVI E SISTEMI S.p.A., 20126 Milano (IT)
(72) Inventor: Roba, Giacomo Stefano, 20052 Monza (MI) (IT); Nutini, Massimo, 20063 Cernusco sul Naviglio (MI) (IT)
(74) Representative: Giannesi, Pier Giovanni

(57) **Abstract**

Method for manufacturing an optical fiber preform by directing a flow of fine glass particles from a deposition burner onto a rotating elongated target preform, wherein a predetermined amount of a high thermal diffusivity gas (e.g. oxygen, hydrogen, helium, argon, nitrogen) is admixed with a flow of glass precursor material before injecting said glass precursor material into the central duct of the burner, in order to increase the heat transfer from said flame towards said flow of glass precursor material. The volume fraction of said high thermal diffusivity gas is less than 0.60 parts (<60% vol) of total volume of the obtained mixture, preferably 0.25 to 0.45 volume fraction parts (25-45% vol); most preferably the admixed gas is oxygen.

## Description

### Field of the invention

The present invention relates to a method for manufacturing an optical fiber preform used to make optical glass fibers. In particular it relates to a method for increasing the deposition rate of a process by increasing the heat transfer from a flame to a flow of glass precursor material.

### Background art

Glass fibers for optical communication are made from high purity, silica-based glass fibers drawn from glass preforms, which preforms are manufactured according to various glass deposition techniques.

Some of these deposition techniques, including vapor axial deposition (VAD) and outside vapor deposition (OVD), are based on flame combustion wherein reactants (i.e. silica precursors, such as SiCl₄, optionally together with dopants materials, such as GeCl₄, for suitably modifying the refractive index of the glass) are fed together with combusting gases through a deposition burner which directs a high temperature flow of forming fine glass particles onto a rotating growing target preform.

According to the VAD deposition technique, the growth of the preform takes place in an axial direction. Thus, the deposition burner(s) is typically maintained in a substantially fixed position, while the rotating preform is slowly moved upwardly (or downwardly) with respect to the burner, in order to cause the axial growth of the preform. Alternatively, the rotating preform can be maintained in a substantially fixed position, while the deposition burner is slowly moved downwardly (or upwardly) with respect to the preform.

Differently from the VAD technique, in the OVD technique the growth of the preform takes place in a radial direction. In this case, a rotating target (e.g. a quartz glass rod) is generally positioned in a fixed horizontal or vertical position and the deposition burner is repeatedly passed along the surface of the growing preform for causing the radial growth of the same.

Independently from the applied deposition technique, a porous glass preform is thus fabricated, which is then consolidated to form a solid glass preform apt for being subsequently drawn into an optical fiber.

Typically, an optical preform comprises a central portion (core) and an outer portion (cladding), the core and the cladding differing in their respective chemical composition and having thus different refractive indexes. As in the optical fibers, the cladding portion forms the majority of the preform. The preform is typically manufactured by producing and consolidating a first preform comprising the core and a first portion of the cladding. An overcladding layer is then deposited onto said first preform, thus obtaining a porous preform, which is then consolidated into the final preform.

In general, conventional burners for manufacturing optical preforms are made up of a plurality of co-axial pipes through which the glass precursor materials (i.e. silica precursors, such as SiCl₄, optionally together with dopants materials, such as GeCl₄), the combusting gases (e.g. oxygen and hydrogen or methane) and, optionally, some inert gas (e.g. argon or helium) are fed.

Examples of such conventional burners are disclosed, for instance, in US patents 4,345,928, 4,465,708, 4,474,593, 4,661,140, and 4,810,189.

"Multi-flame" burners, generating a plurality of independent flames disposed concentrically one to each other are also disclosed, for instance, in US 4,801,322 or US 4,826,520.

Typically, the glass precursor material is fed through the central pipe of the burner, while other gases are fed through the annular openings formed by the concentrically disposed pipes.

Some prior art documents disclose instead the addiction of substantial amounts of gases to the flow of glass precursor material.

For instance, US 5,366,531 discloses a deposition burner wherein 32 g/min (i.e. about 4-4.5 l/min) of SiCl4 and 10 l/min of oxygen are flown through the central nozzle of the burner, oxygen thus representing more than 70% of the mixture's total volume.

US 4,826,520 discloses a burner wherein GeCl4 is flown through the central passage while a mixture of 10.5 l/min of hydrogen and 1.54 l/min of SiCl4 is flown through the first annular passage surrounding the central passage.

US 4,345,928 disclose a burner wherein a flow of Argon as carrier gas is used to adduce liquid silicon tetrachloride into a the burner's pipe.

The Applicant has however observed that the addition of relatively high volumes of other gases in the flow of glass precursor material (in particular of more than about 60% of the total volume), may negatively affect an effective control over the deposition process parameters (e.g. by causing undesired turbulence or by reducing the residence time of silica particles inside the flame), thus resulting in reduced deposition rates of the same process.

With the increasing demand for optical fibers, there is now the need of manufacturing optical preforms of larger dimensions and in a more effective and fast manner.

As observed by the Applicant, while the burners for depositing the core and the inner cladding of the preform are generally of reduced dimensions, burners used for depositing the overcladding, in particular for large dimensions preforms, shall be relatively larger, in order to allow the generation of the higher flow rates necessary for increasing the amount of deposited material, maintaining at the same time the velocity of the gases relatively low.

The Applicant has however observed that if the dimensions of conventional burners, in particular of overcladding burners, are simply increased in order to improve the manufacturing speed of optical preforms, the deposition rate of said burner may be diminished. As observed by the Applicant, this is possibly caused by an insufficient growth of the silica particles in the stream directed towards the preform. As a matter of fact, by increasing the dimensions of the deposition burner, the dimensions of the central pipe through which the glass precursor material is typically flown shall be increased accordingly, thus producing a stream of glass precursor material of relatively large diameter. If the diameter of said stream is too large, the particles flowing along the inner core of the stream may receive a reduced amount of heat from the surrounding flame, thus being prevented from reaching the optimal deposition dimensions.

In order to limit the above problem, the Applicant has now found that the flow of gas precursor material can advantageously be admixed with a predetermined amount of a gas having a high thermal diffusivity, so to increase the heat transfer towards the inner core of said flow of glass precursor material, said amount of high thermal diffusivity gas being however sufficiently limited in order not to negatively affect the other process parameters.

### Summary of the invention

An aspect of the present invention thus relates to a method for increasing the heat transfer from a flame towards a flow of glass precursor in a process for manufacturing an optical preform, which comprises admixing with said flow of glass precursor material a high thermal diffusivity gas in a volume fraction of less than about 0.60 parts with respect to the total volume of the obtained mixture.

In particular, an aspect of the present invention relates to a method for manufacturing an optical preform by directing a flow of fine glass particles from a deposition burner onto a rotating elongated target preform, said method comprising the steps of
feeding said burner with a flow of a glass precursor material and directing said flow of glass precursor material towards said target preform;
feeding said burner with a combustible gas and a combustion sustaining gas in order to generate a flame, thereby forming said flow of fine glass particles;
wherein a high thermal diffusivity gas is admixed with said glass precursor material in a volume fraction of less than about 0.60 parts with respect to the total volume of the obtained mixture.

Preferably, said glass precursor material is heated above its boiling point before being injected into the burner.

Said high thermal diffusivity gas is preferably admixed in a maximum volume fraction of about 0.5 parts or less with respect to the total volume of the mixture, more preferably of less than about 0.45 parts or less.

Preferably, said high thermal diffusivity gas is admixed in a volume fraction of at least about 0.05, preferably of at least about 0.1 parts with respect to the total volume of the mixture. Particularly preferred is a volume fraction of at least 0.25 parts.

Said high thermal diffusivity gas is preferably added to the flow of glass precursor material in an amount such that the overall thermal diffusivity of the so obtained mixture is higher than about 50% of the thermal diffusivity of the glass precursor material. In particular, when silicon tetrachloride is used, the thermal diffusivity of the mixture should preferably be higher than about 4.0·10⁻⁶ m²/s at 400°K. Preferably, the thermal diffusivity of the mixture is comprised between 4.0·10⁻⁶ m²/s and 5.5·10⁻⁶ m²/s at 400°K.

According to a preferred embodiment, the thermal diffusivity of the high thermal diffusivity gas is higher than about 3·10⁻⁵ m²/s at 400°K, preferably from about 3.5·10⁻⁵ m²/s and about 2·10⁻⁴ m²/s.

The high thermal diffusivity gas is preferably selected among hydrogen, helium, argon, nitrogen and oxygen, the latter being particularly preferred.

Preferably, said burner comprises a central duct and a plurality of co-axial ducts disposed about said central duct, wherein:
the glass precursor material admixed with the high thermal diffusivity gas is fed through at least said central duct; and
said combustible gas and said combustion sustaining gas are fed through at least a first and second of said co-axial ducts.

### Brief description of the drawings

Fig. 1 shows a schematic transversal cross-sectional view of an embodiment of a burner according to the present invention;
Fig. 2 shows a schematic longitudinal cross-sectional view of an embodiment of a burner according to fig. 1;
Fig. 3 shows a schematic transversal cross-sectional view of an alternative embodiment of a burner according to fig. 1;
Fig. 4 shows a schematic transversal cross-sectional view of an alternative embodiment of a burner according to the present invention;
Fig. 5 shows a longitudinal cross-sectional view of a preferred embodiment of a burner according to the present invention;
Fig. 6 is a section according to line VI-VI of fig. 5; and
Fig. 7 schematically shows an overcladding deposition process according to the present invention.

### Description of preferred embodiments

According to the present invention, a duct of a deposition burner, preferably the central duct, particularly of a multi-flame burner for overcladding deposition, is fed with a flow of glass precursor material admixed with a predetermined amount of a high' thermal diffusivity gas. Said flow of glass precursor material and of high thermal diffusivity gas is then in turn surrounded by a flame generated by a combusting gas and a combustion sustaining gas flowing through further ducts of said burenr.

In the present description, the term glass precursor material is intended to refer to any suitable raw material capable of reacting in the presence of a flame to form glass (pure silica) or doped glass particles. Preferably, silicon tetrachloride (SiCl₄) can be used. Alternatively, other silicon containing reactants can be used, such as SiHCl₃, SiH₂Cl₂, SiH₃Cl or SiH₄. In addition chlorine-free silicon containing reactants can be used, such as the siloxane compounds disclosed in US patent no. 5,043,002, e.g. octamethylcyclotetrasiloxane, or the organosilicone compounds disclosed in European Patent Application Publ. No. EP 1,016,635, e.g. hexamethyldisilane.

A preferred glass precursor material capable of forming doped glass particles under the reaction conditions of a flame burner according to the invention is Germanium tetrachloride. Alternative dopant materials are POCl₃ or BBr₃.

Mixtures of the above glass precursor materials (e.g. SiCl₄ and GeCl₄) in variable proportion can be used to suitably modify the refractive index of the manufactured preform.

As the above glass precursor materials are generally liquid at ambient temperature, they are preferably heated in advance into a vaporizer, so that high temperature vapors of the glass precursor material are flown through the central pipe of the burner. For instance, silicon tetrachloride, having a boiling point of about 57°C (at 101.330 Pa) is heated at about 100°C in the vaporizer before being fed into the burner.

As previously mentioned the predetermined amount of a high thermal diffusivity gas is added to the flow of glass precursor material for increasing the heat transfer from the flame towards the inner core of said flow.

As a matter of fact, the glass precursor material flowing through the central opening of the burner shall receive from the surrounding flame the necessary heat for the glass precursor material to undergo a flame hydrolysis reaction and thus generate the fine silica particles to be deposited. In addition, in order to reach the desired dimensions before deposition, the growing glass particles should reside for a sufficient time at high temperature inside the flame. Thus, in the multi-flame type burners, due to the presence of the outer flame, the hydrolysis reaction of the glass precursor material is continued downstream and the residence time of growing glass particles inside the flame is increased. However, Applicant has observed that heat transfer from the flame to the flow of glass precursor material and forming glass particles is substantially reduced when the mass flow rate of glass precursor material is increased to match the requirements of an increased silica particles production, such as in the overcladding deposition of large diameter preforms. In particular, the large dimension of the flow may prevent the inner core of said flow from receiving the necessary heat from the surrounding flame. Accordingly, the temperature of said inner core remains too low for an acceptable particles growth, thus lowering the deposition rate of the burner.

The thermal diffusivity of a gas is defined as the ratio of the thermal conductivity to the heat capacity. It measures the ability of a material to conduct thermal energy relative to its ability to store thermal energy. Typical values of thermal diffusivity of gases can be found on a number of reference books, such as R.B.Bird, "Transport Phenomena", Wiley & Sons, New York 1960, or F.P. Incropera, D.P. DeWitt, "Fundamentals of heat and mass Transfer", Wiley and Sons; 3rd edition , New York, 1996.

For the purposes of the present invention, a high thermal diffusivity gas is a gas having a thermal diffusivity of at least 3.0·10⁻⁵ m²/s or higher, e.g. up to about 2.0·10⁻⁴ m²/s (values at 400°K). Examples of suitable high thermal diffusivity gases are oxygen, nitrogen, argon, helium or hydrogen, having a thermal diffusivity at 400°K of 3.6·10⁻⁵ m²/s, 3.7·10⁻⁵ m²/s, 3.8·10⁻⁵ m²/s, 3.0·10⁻⁴ m²/s and 2.3·10⁻⁴ m²/s, respectively.

Gases having higher molecular weights are preferably used. Particularly preferred is oxygen.

Applicant has observed that the presence of said predetermined amount of high thermal diffusivity gas in the flow of glass precursor material, while increasing the heat transfer towards the inner core of said flow of glass precursor material, allows to increase the deposition rate (i.e. the weight of glass material deposited in predetermined time) of the process.

Said high thermal diffusivity gas is preferably added to the flow of glass precursor material in an amount such that the overall thermal diffusivity of the so obtained mixture is about 50% higher than the thermal diffusivity of the glass precursor material. In particular, when silicon tetrachloride is used, the thermal diffusivity of the mixture should preferably be higher than about 4.0·10⁻⁶ m²/s at 400°K. Preferably, the thermal diffusivity of the mixture is comprised between 4.0·10⁻⁶ m²/s and 5.5·10⁻⁶ m²/s at 400°K.

Thus, said high thermal diffusivity gas is preferably added in a volume fraction of at least 0.05 parts with respect to the total volume of the mixture (i.e. at least 5% by volume), preferably in a volume fraction of at least 0.1 parts per volume. Advantageously, said high thermal diffusivity gas is preferably added in a volume fraction of at least 0.25 parts.

However, as observed by the Applicant, too high amounts of said high thermal diffusivity gas do not substantially increase said deposition rate. On the contrary, excessivley high volumes of high thermal diffusivity may increase too much the flow velocity at the exit orifice of the central pipe, thus causing undesired turbulence where the flow of gases and glass precursor material admixes with the other flame gases, with disruption of the uniformity of said flow and possible reduction in the deposition rate of the process. In addition, an excessive increase of the velocity of the flow of gases and glass precursor material may unacceptably reduce the residence time of the forming silica particles inside the flame, thus negatively affecting the regular growth of said particles and the effective deposition of said particles onto the preform.

Furthermore, when oxygen is used as the high thermal diffusivity gas, an excessive increase in the oxygen relative amount may result in undesired reactions with the glass precursor material. These reactions may cause the formation of silica particles inside the central pipe or in proximity of the orifice of said pipe, with possible adhesion of said particles onto the internal surface of the tube and consequent obstruction ("silica build up") of the pipe.

The high thermal diffusivity gas is thus preferably added in a volume fraction of less than about 0.60 parts with respect to the total volume of the mixture (i.e. less than about 60% by volume), more preferably in a volume fraction of less than about 0.50 parts with respect to the total volume. Volume fraction of less than about 0.45 parts are particularly preferred.

As the thermal diffusivity of a gas depends, further from its specific thermal diffusivity coefficient, also from the mass fraction of the added gas, it is preferable to use gases with a higher molecular weight, in order to reduce the volume fraction of added gas (or, alternatively, using the same volume fraction of gas, increase its mass fraction). Oxygen is thus preferred for its higher molecular weight and for its relatively high thermal diffusivity.

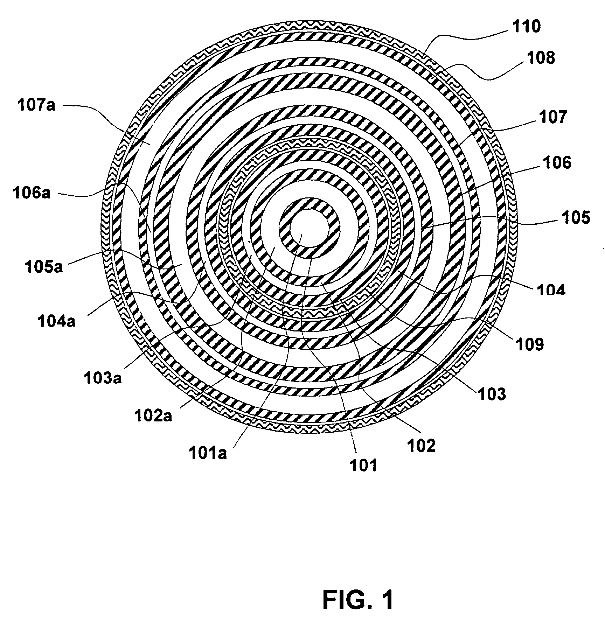

Fig. 1 shows a schematic transversal cross-sectional view of an example of a burner suitable for embodying the deposition method of the invention. In the specific, this embodiment illustrates a double-flame burner, particularly suitable for overcladding deposition.

The burner of fig. 1 comprises seven openings 101a-107a through which the gases for forming the preform are passed.

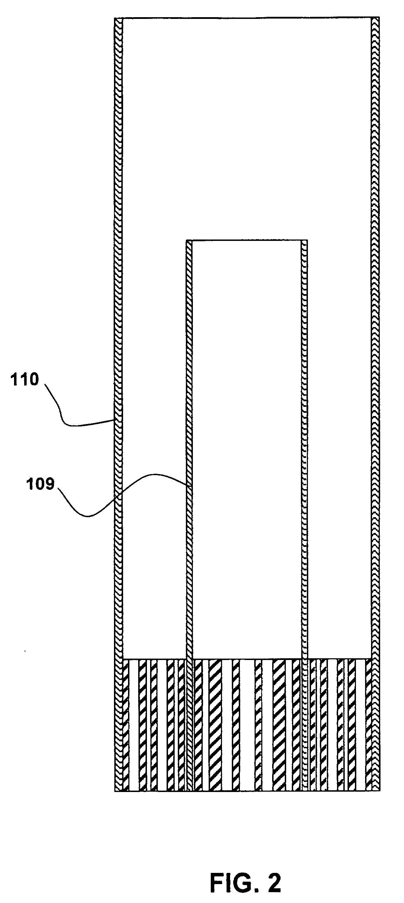

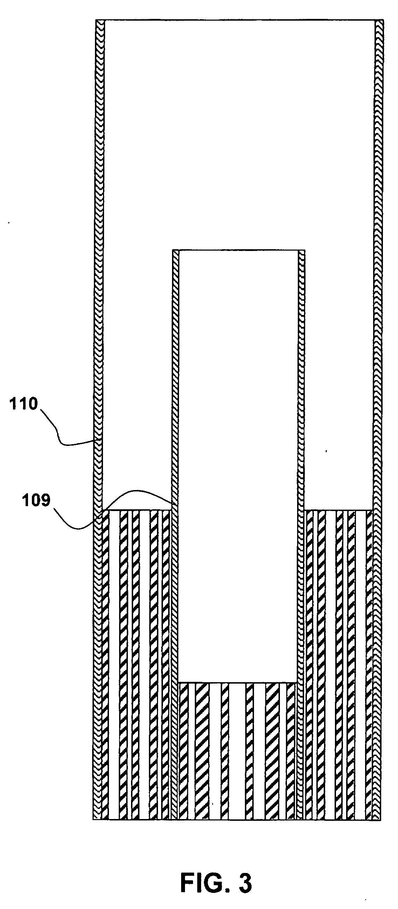

Openings 101a-103a define the inner section of the burner, while openings 104a-107a define the outer section. The central opening 101a is delimited by the walls of a pipe 101, while the other annular openings are delimited by the respective outer and inner walls of pipes 101 to 108. The length of the pipes can be substantially the same, as shown in detail in fig. 2, or the pipes defining the openings of the outer section can be longer than the pipes defining the openings of the inner section, as shown in fig. 3. In order to avoid excess overheating of the pipes forming the outer section, particularly when these are made from metallic material, the length of said pipes shall preferably not exceed the length of the pipes of the inner section for more than about 80 mm, more preferably for no more than about 60 mm.

Preferably said pipes are made from a metallic material, more preferably from an easily machinable and heat/corrosion resistant stainless steel. An example of a suitable metal material is AISI (American Institute Steel and Iron) 316L, which is a stainless steel comprising about 0.03% C about 16-18% of Cr, about 11.5% - 14.5% of Ni, about 2% of Mn and about 2.5% - 3% of Mo.

Typically, the inner pipe 101 has an inner diameter of from about 6 mm to about 8 mm and a thickness of from about 0.5 mm to about 2 mm.

The other pipes, having preferably a thickness comprised from about 0.5 mm to about 2.5 mm, are then arranged concentrically one to each other to form openings 102a-107a having widths of from about 1 mm to about 3.5 mm, depending on the relative diameter of the pipe and flow rate of gas through the aperture.

In particular, the width of each opening is selected according to the amount and kind of gas which is flown through said opening and to the relative radial position of said opening. For instance, in a burner particularly designed for the outer cladding deposition, openings through which inert gas is flown are dimensioned so to obtain an exit velocity of the gas of from about 0.1 and about 2 m/s. Said annular openings may thus have a width of from about 1 mm to about 1.5 mm. On the other side, openings through which combustion gases are flown are dimensioned so to obtain an exit velocity of the gas of from about 2 and about 10 m/s. Said annular openings may thus have a width of from about 2 mm to about 3.5 mm.

A separating tube 109 made from a heat resistant material, is disposed into the annular housing between pipes 103 and 104, said tube extending for a certain length farther from the tips of the pipes of the inner portion of the burner, as shown in figs. 2 and 3.

Tube 109 allows both to physically separate the inner flame from the metal components of the outer section of the burner and to confine the inner flame.

A second tube 110, also made from heat resistant material, can be disposed externally to the metal pipe 108, extending for a certain length farther from the tips of the pipes of the outer portion of the burner, as shown in figs. 2 and 3, for confining the outer flame.

The heat resistant material of tubes 109 and 110 is made for instance from quartz glass or alumina, preferably quartz, in particular high purity quartz.

Preferably, the separating tube 109 extends for a length such to entirely surround the reaction zone where the glass precursor material reacts to form the glass particles.

Thus, particularly for overcladding burners, the Applicant has determined that the separating tube 109 should preferably extend for at least about 80 mm from the tips of the pipes of the inner section of the burner. The length of the tube should however preferably not exceed about 150 mm. Preferably, said length is from about 90 to about 130 mm.

Preferably, the outer tube 110 extends for about 150 mm to about 220 mm from the tips of the pipes of the outer section.

Advantageously, the metallic coaxial pipes are first assembled together to form the burner, leaving a suitable annular clearance between two neighbouring pipes, said clearance being apt to receive the separating quartz tube 109. The separating tube 109 can thus be inserted into and (if necessary) removed from said annular clearance with a rather simple operation. Similarly, the outer glass tube 110 can be fitted on (and removed from) the outer surface of the outer metal pipe (suitably adapted for receiving said glass tube), after the metal pipes of the burner have been assembled together.

Typically the mixture of glass precursor material and high thermal diffusivity gas is flown through the central duct of the burner, defined by opening 101a.

A combustible gas and a combustion sustaining gas are then flown through at least two of the annular ducts defined by openings 102a-107a. Examples of suitable combustible gas are hydrogen or hydrocarbons, such as methane. Oxygen is typically used as the combustion sustaining gas.

If desired, an inert gas may be flown through some of the annular ducts 102a-107a, either alone or admixed with the above combustible gas or combustion sustaining gas. For instance, an inert gas may be flown through an annular duct disposed between a first annular duct dedicated to the inlet of a combustible gas and a second annular duct dedicated to the inlet of a combustion sustaining gas. This allows a physical separation of the two flows of combustible gas and of combustion sustaining gas, thus displacing the flame away from the tips of the metal pipes and avoiding possible overheating of the same. Similarly, the flame can be displaced away from the tips of the metal pipes by suitably increasing the inlet speed of the combustible gas and of combustion sustaining gas. Examples of suitable inert gases are argon, helium, nitrogen.

With specific reference to the burner design of fig. 1, the glass precursor material, e.g. silicon tetrachloride, admixed with a high thermal diffusivity gas, preferably oxygen, is thus flown through the central opening 101a, hydrogen through annular opening 102a and oxygen through annular opening 103a of the inner section of the burner. The flows of hydrogen and oxygen through the annular openings are maintained at a sufficiently high rate in order to form the flame at a sufficient distance from the tips of the metal pipes. Oxygen is preferably kept in a relatively high stoichometric excess with respect to hydrogen, the O₂/H₂ molar ratio being preferably of from about 1.8:1 to about 3:1.

Said excess of oxygen allows to obtain a convergent flame and to create an oxygen boundary layer on the inner surface of the quartz tube 109, for reducing the heat transferred onto the quartz tube. For determining the excess of oxygen in the inner flame, also the possible reaction of said oxygen with the hydrogen flowing from the outer section of the burner shall be taken into account. In order to effectively create said boundary layer, the Applicant has observed that the inlet speed of the oxygen gas into a burner as above defined should preferably be of at least 3.0 m/s or higher, e.g. up to about 10.0 m/s.

In the outer section of the burner, argon is flown through opening 104a, hydrogen through opening 105a, argon through opening 106a and oxygen through opening 107a. In this case, oxygen is flown in a stoichometric ratio or preferably in slight excess with respect to hydrogen, the O₂/H₂ molar ratio being from about 1:2 to about 1:1 preferably from about 1:1.95 to about 1:1.75.

As previously mentioned, the hydrogen flowing from the outer section may also partially react with the excess of oxygen flowing from the inner section of the burner.

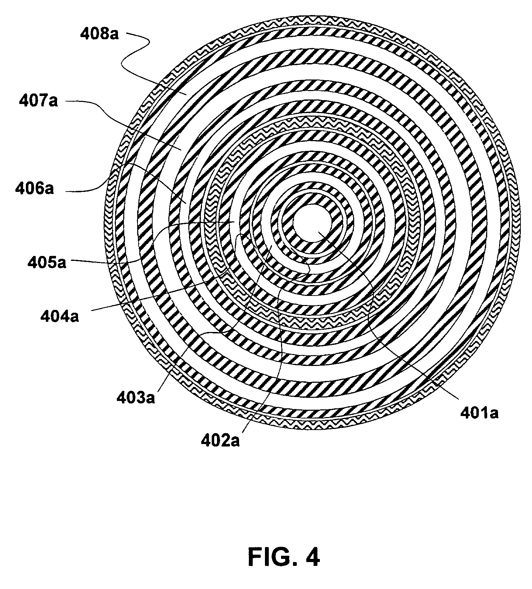

According to an alternative configuration shown in fig. 4, the glass precursor material, e.g. silicon tetrachloride, admixed with a high thermal diffusivity gas, preferably oxygen, is flown through the central opening 401a, argon through opening 402a, hydrogen through opening 403a, argon through opening 404a and oxygen through opening 405a of the inner section of the burner. In this case, the interposition of an argon's flow between oxygen's and hydrogen's flows allows the flame to be displaced away from the tips of the metal pipes. As previously mentioned, oxygen flowing through opening 405a is preferably kept in a relatively high stoichometric excess with respect hydrogen. In the outer section of the burner, argon is flown through opening 406a, a mixture of hydrogen and argon is flown through opening 407a, and oxygen through opening 408a. Premixing argon with hydrogen increases the momentum of the mixture containing combustible gas. This is useful for directing the flow of combustion products toward the target soot and also for lifting the flame from burner orifices.

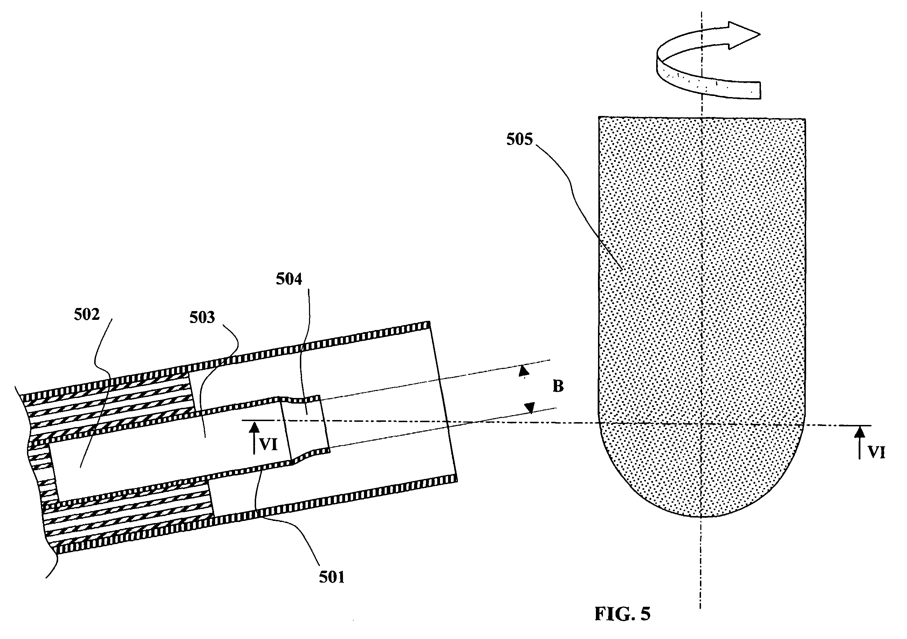

Fig. 5 show a schematic longitudinal cross-sectional view of a burner with a modified glass quartz tube 501 according to the present invention, and the relative target preform 505 (not in scale).

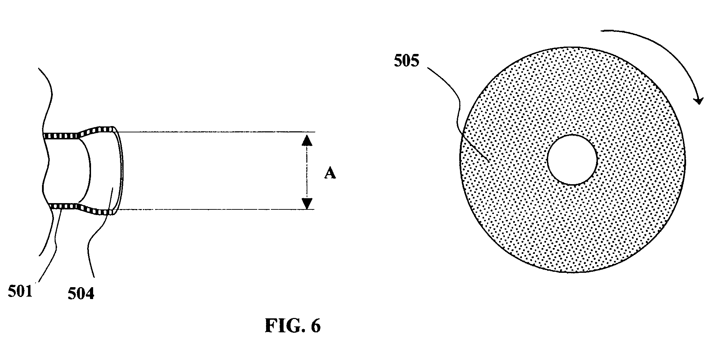

Fig. 6 is a section according to plane VI-VI of fig. 5, showing the longitudinal cross-section of the terminal portion of the modified quartz glass tube 501 and of the relative target preform.

As shown in fig. 5, the quartz glass tube 501 confining the inner flame has preferably a substantially circular cross-section in its initial portion 502, i.e. in the proximity of the metal co-axial pipes, and preferably in its middle portion 503, for causing an optimal and homogeneous heating of the reacting glass precursor material. The confining quartz glass tube 501 is then suitably modified in correspondence with its terminal portion 504, in order to confer a substantially elliptical cross section to the flow of glass particles and to the surrounding flame, with a major axis "A" (see fig. 6) and a minor axis "B". Other suitable forms having a major and minor axis (e.g. rectangular) can be applied to the outlet of the glass tube. As observed by the Applicant, the deposition rate of a burner can be increased by disposing said confining quartz glass tube such that the major axis "A" of the elliptic flow lays on a plane which is substantially perpendicular to the longitudinal axis of the preform.

This redistribution of the stream of growing silica particles results in a further increase of the deposition rate of the burner.

In order to effectively increase the deposition rate of the burner, the ratio between the major axis and the minor axis shall preferably be at least about 1.2 or higher. On the other side, in order to avoid an excessive modification of the geometry of the flow of glass particles (which may cause undesired turbulences in the flows of the burner) said ratio is preferably kept lower than about 2.5. Preferably, said ratio is from about 1.25 to about 1.8.

In addition, said major axis should be relatively smaller with respect to the initial diameter of the growing preform, in order to avoid excessive dispersion of silica particles. Preferably, said major axis is in a ratio of at least about 1:2 or higher with respect to the initial diameter of the growing preform, more preferably of at least about 1:2.5 or higher. On the other side, said major axis should be sufficiently large with respect to the final diameter of the preform, in order to effectively increase the deposition rate of the process.

In particular, the ratio between said major axis and the final diameter of the preform is preferably lower than about 1:7, preferably lower than about 1:6.

The present method for increasing the heat transfer from the flame towards the flow of glass precursor material can be applied to any conventional deposition burner.

The method of the present invention is however particularly suitable for being used in the overcladding deposition process of large diameter preforms, where the flow rate of the glass precursor material is typically kept higher than about 8 slm (standard liter per minute), in particular at about 10 slm or higher.

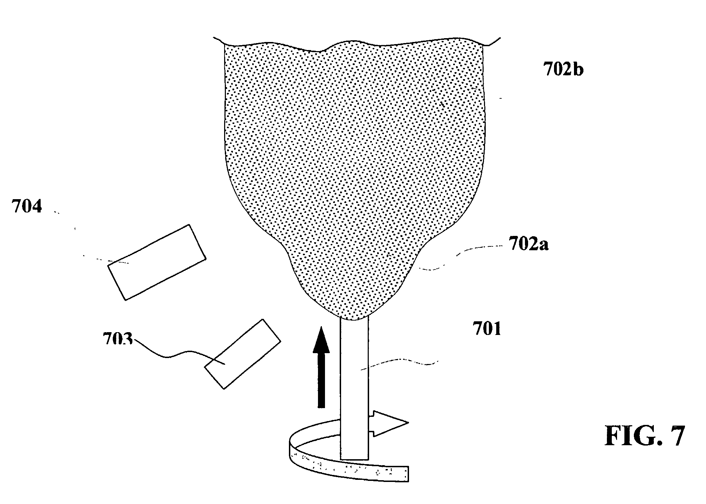

Fig. 7 schematically illustrates a typical overcladding deposition process for embodying the method of the present invention. The deposition typically starts onto a glass rod 701 of about 20 mm diameter, comprising the core of the preform and a first portion of the cladding layer, separately manufactured according to conventional techniques. The target preform is rotated about is longitudinal axis and slowly upwardly translated. A lower overcladding burner 703 deposits a first portion of overcladding layer 702a, e.g. up to a diameter of about 90-100 mm onto the preform. An upper burner 704 then completes the deposition by depositing a second overcladding layer 702b, e.g. increasing the diameter of the deposited soot at about 180-200 mm. Typically, the upper burner 704 has increased dimensions with respect to the lower one, in order to allow the deposition of higher amount of silica particles in the time unit. These dimensions correspond substantially to the dimensions mentioned in connection with the burner illustrated in figs. 1-4.

The so obtained preform is then heated into a furnace and collapsed to obtained a final preform of about 60-80 mm diameter, which is then drawn into an optical fiber according to conventional techniques. In order to verify the effects of adding a high heat diffusivity gas to the flow of glass precursor material onto the deposition efficiency (i.e. the ratio of deposited silica to the theoretically maximum obtainable value), the following experiments has been performed.

### Examples

According to a first experiment, a double-flame burner as shown in fig. 1 has been employed, where the separating quartz tube 109 has been removed, the housing of said quartz tube having been replaced by an additional duct through which a flow of argon has been passed. The burner thus comprised one central duct 1a and seven co-axial annular ducts. These ducts will be referred to in the present example as duct 1a (the central one) and ducts 2a-8a (the annular ducts). The dimensions of the ducts (internal diameter, ID, and outer diameter, OD) were as indicated in the following table 1.

**Tab. 1:**

| **Dimensions of ducts** | | | | | | | | |
|---|---|---|---|---|---|---|---|---|
| **Duct no.** | **1a** | **2a** | **3a** | **4a** | **5a** | **6a** | **7a** | **8a** |
| **ID (mm)** | - | 11 | 21.4 | 28.4 | 37.6 | 44.2 | 55.8 | 61.1 |
| **OD (mm)** | 7 | 17.6 | 24.4 | 33.6 | 40.2 | 50.5 | 58.3 | 67.6 |

The length of the pipes forming the inner and the outer flame were substantially the same, as shown in fig. 3.

Two different tests have been performed with this burner design, by maintaining at a constant rate the gases flowing in the annular ducts, as shown in table 2.

**Tab.2:**

| **Flow rates of gases** | | | | | | | |
|---|---|---|---|---|---|---|---|
| **Duct no.** | **2a** | **3a** | **4a** | **5a** | **6a** | **7a** | **8a** |
| **Gas** | **H**_{**2**} | **Ar** | **O**_{**2**} | **Ar** | **H**_{**2**} | **Ar** | **O**_{**2**} |
| **Flow rate (slm)** | 27 | 5 | 80 | 10 | 160 | 10 | 130 |

In the first test (A), only SiCl₄ (12.0 s.l.m.) was flown through the central duct of the burner, while in test B a volume fraction of 0.29 parts of oxygen was added to the same amount of SiCl₄, as reported in table 3.

In all tests, silicon tetrachloride was fed into the burner at a temperature of about 100°C.

The deposition rate obtained in the test B has been normalized with respect to the deposition rate measured in test A and is also reported in the following table 3.

**Table 3:**

| **Effect of addition of oxygen on the deposition rate** | | | |
|---|---|---|---|
| | **Flow Rate SiCl**_{**4**}**+O**_{**2**} **(slm)** | **O**_{**2**} **Volume fraction** | **Normalized deposition rate** |
| **Test A** | 12+0 | 0 | 1 |
| **Test B** | 12+5 | 0.29 | 1.26 |

Further two tests have been carried out by using a similar burner, where a separating glass tube has been used for separating the inner flame from the outer one. Such burner thus comprised a central duct 1a through which silicon tetrachloride and oxygen were flown, two co-axial annular ducts 2a and 3a for the flow of the gases forming the inner flame and four co-axial annular ducts 4a-7a for the flow of the gases forming the outer flame. A quartz tube (107 mm length) was used for separating the internal and the external flame.

The two tests have been carried out by admixing different volumes of oxygen with the silica precursor in the central duct, while maintaining the flows of said silica precursor and of the flame forming gases at a constant rate, as indicated in the following table 4.

**Table 4:**

| **Volumes of gases** | | | | | | | | | |
|---|---|---|---|---|---|---|---|---|---|
| **Test** | **Duct No.** | **1a** | **2a** | **3a** | **4a** | **5a** | **6a** | **7a** | **O**_{**2**} **vol. fraction** |
| | Reactant | SiCl₄+O₂ | H₂ | O₂ | Ar | H₂ | Ar | O₂ | |
| **C** | Flow Rates (slm) | 10+2 | 24 | 65 | 14 | 160 | 10 | 115 | **0.17** |
| **D** | Flow Rates (slm) | 10+7 | 24 | 65 | 14 | 160 | 10 | 115 | **0.41** |

The deposition rate of these tests have been normalized with respect to the deposition rate of test A. For test C a normalized deposition rate if 1.25 have been obtained, while for test D a normalized deposition rate of 1.29 has been obtained.

As shown by the above tests A and B, the addition of a suitable limited amount of oxygen as a high heat diffusivity gas to the flow of glass precursor material thus increases the deposition efficiency of the burner.

As shown by the results relative to the modified burner used in tests C and D, a substantial increase in the deposition rate can be obtained by adding about 0.17 parts per volume of oxygen. Said deposition rate can be increased by further increasing the amount of oxygen to 0.41 parts per volume. Although desirable, it can be appreciated that this further increase in the deposition rate is however rather low when compared to the higher amount of oxygen added to the silica precursor's flow. This asymptotic behaviour thus indicates that higher addition of oxygen will result into further slight increases of the deposition rate of the burner. On the other hand, the addition of substantial amounts of oxygen (e.g. higher than 60% per volume) may result in the problems previously mentioned.

## Claims

1. Method for increasing the heat transfer from a flame towards a flow of glass precursor in a process for manufacturing an optical preform, which comprises admixing with said flow of glass precursor material a high thermal diffusivity gas in a volume fraction of less than about 0.60 parts with respect to the total volume of the obtained mixture..

2. Method for manufacturing an optical preform by directing a flow of fine glass particles from a deposition burner onto a rotating elongated target preform, said method comprising the steps of:
feeding said burner with a flow of a glass precursor material and directing said flow of glass precursor material towards said target preform;
feeding said burner with a combustible gas and a combustion sustaining gas in order to generate a flame, thereby forming said flow of fine glass particles;
wherein a high thermal diffusivity gas is admixed with said glass precursor material in a volume fraction of less than about 0.60 parts with respect to the total volume of the obtained mixture.

3. Method according to claim 1 or 2 wherein said high thermal diffusivity gas is added to the flow of glass precursor material in an amount such that the overall thermal diffusivity of the so obtained mixture is higher than about 50% of the thermal diffusivity of the glass precursor material.

4. Method according to claim 3 wherein said glass precursor material is silicon tetrachloride and the thermal diffusivity of the mixture is higher than about 4.0·10⁻⁶ m²/s at 400°K.

5. Method according to claim 4 wherein said thermal diffusivity of the mixture is comprised between 4.0·10⁻⁶ m²/s and 5.5·10⁻⁶ m²/s at 400°K.

6. Method according to claim 1 or 2 wherein said high thermal diffusivity gas is admixed in a volume fraction of at least about 0.05.

7. Method according to claim 1 or 2 wherein said high thermal diffusivity gas is admixed in a volume fraction of at least about 0.1 parts with respect to the total volume of the mixture.

8. Method according to claim 1 or 2 wherein said high thermal diffusivity gas is admixed in a volume fraction of at least about 0.25 parts with respect to the total volume of the mixture.

9. Method according to claim 1 or 2 wherein said high thermal diffusivity gas is admixed in a volume fraction of less than about 0.5 parts with respect to the total volume of the mixture.

10. Method according to claim 1 or 2 wherein said high thermal diffusivity gas is admixed in a volume fraction of less than about 0.45 parts with respect to the total volume of the mixture.

11. Method according to claim 1 or 2 wherein said high thermal diffusivity gas has a thermal diffusivity higher than about 3·10⁻⁵ m²/s at 400°K.

12. Method according to claim 1 or 2 wherein said high thermal diffusivity gas has a thermal diffusivity of from about 3.5·10⁻⁵ m²/s and about 2·10⁻⁴ m²/s.

13. Method according to claim 1 or 2 wherein said high thermal diffusivity gas is selected among hydrogen, helium, argon, nitrogen and oxygen.

14. Method according to any of the preceding claims, wherein said burner comprises a central duct and a plurality of co-axial ducts disposed about said central duct, wherein:
- the glass precursor material admixed with the high thermal diffusivity gas is fed through at least said central duct; and
- said combustible gas and said combustion sustaining gas are fed through at least a first and second of said co-axial ducts.
